(19) **Europäisches Patentamt European Patent Office Office européen des brevets**

(11) **EP 2 070 018 B1**

(12) **FASCICULE DE BREVET EUROPEEN**

(45) Date de publication et mention
de la délivrance du brevet:
**24.03.2010 Bulletin 2010/12**

(51) Int Cl.:
***G06K 19/07*** *(2006.01)*

(21) Numéro de dépôt: **07823316.0**

(22) Date de dépôt: **20.07.2007**

(86) Numéro de dépôt international:
**PCT/FR2007/001255**

(87) Numéro de publication internationale:
**WO 2008/009830 (24.01.2008 Gazette 2008/04)**

(54) **DISPOSITIF D'IDENTIFICATION PAR RADIO FRÉQUENCE (RFID) APPOSÉ SUR UN OBJET À IDENTIFIER**

AN EINEM ZU IDENTIFIZIERENDEN OBJEKT BEFESTIGTES RFID

RADIOFREQUENCY IDENTIFICATION DEVICE (RFID) AFFIXED TO AN OBJECT TO BE IDENTIFIED

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **21.07.2006 FR 0606657**

(43) Date de publication de la demande:
**17.06.2009 Bulletin 2009/25**

(73) Titulaire: **ASK S.A.**
**06560 Valbonne (FR)**

(72) Inventeur: **GRASSET, Yannick**
**06220 Vallauris (FR)**

(56) Documents cités:
**EP-A2- 0 602 448     WO-A-03/056510**
**WO-A-2004/093341**

## Description

Domaine technique

La présente invention concerne l'identification par un lecteur distant d'objets à l'aide de dispositifs portables sans contact (RFID) et plus particulièrement un dispositif d'identification par radiofréquence pouvant être identifié malgré son éloignement du lecteur.

Etat de la technique

Les dispositifs portables, tels que les étiquettes à puce sans contact (tag), sont largement utilisés de nos jours pour l'identification d'objets quelconques par un lecteur distant.

De façon générale, l'étiquette appelée aussi dispositif d'identification par radiofréquence (RFID), est utilisée pour reconnaître ou identifier à plus ou moins grande distance et dans un minimum de temps, un objet, un animal ou une personne porteuse de l'étiquette. Une telle étiquette électronique se compose principalement d'un circuit intégré contenant une puce dans laquelle sont conservées en mémoire les données faisant partie de l'application considérée et d'une antenne connectée au circuit intégré. La lecture des informations contenues dans la puce se fait au moyen d'un lecteur qui transmet des signaux électromagnétiques à une fréquence donnée vers l'étiquette. L'étiquette étant un élément passif, le lecteur lui fournit son énergie d'alimentation de façon à permettre au dispositif RFID de transmettre en retour le contenu de la mémoire tel que le numéro d'identification. Un dialogue s'établit selon un protocole de communication prédéfini et un certain nombre de données sont ainsi échangées entre l'étiquette et le lecteur.

L'établissement des communications entre l'étiquette et le lecteur ne se fait pas sans un minimum d'énergie. La qualité et la quantité d'énergie transférée dépendent d'un certain nombre de critères tels que les fréquences de fonctionnement, la distance entre l'antenne du lecteur et l'antenne de l'étiquette, etc. L'étiquette, considérée comme un circuit résonnant, est accordée à une fréquence nominale donnée pour qu'il existe une communication optimum entre elle et l'antenne du lecteur lorsque l'étiquette se trouve dans le champ émis par le lecteur. Actuellement, les signaux électromagnétiques transmis par le lecteur se font en mode UHF dans des plages de fréquence de 860-960 MHz et 2,45 GHz. Les transmissions en mode UHF autorisent des échanges à grande distance de l'ordre de 50 cm à 1m ou plusieurs mètres puisque la quantité d'énergie nécessaire à l'échange d'informations entre l'étiquette et le lecteur est très petite.

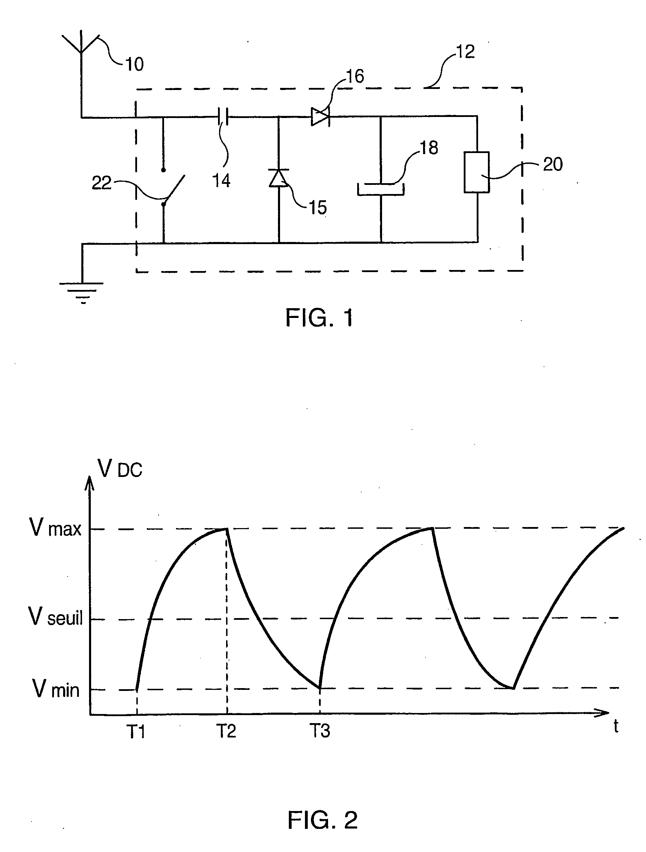

La figure 1 représente le schéma électrique d'un dispositif RFID classique comprenant une antenne 10 connectée à une puce 12. Les signaux électromagnétiques reçus sont redressés par les diodes 15 et 16. La capacité 14 sert de liaison AC aux signaux UHF. Quant au condensateur polarisé 18, il joue le rôle d'une capacité réservoir pour fournir la tension d'alimentation à la puce. L'ensemble des autres composants de la puce est équivalent à une impédance 20.

Lorsque le dispositif RFID transmet ses données numériques d'identification au lecteur, il le fait par l'intermédiaire d'un commutateur électronique 22, à un rythme lié au débit. La fermeture de cet « interrupteur » agit comme une désadaptation de l'ensemble Puce - Antenne. De cette façon une quantité différente d'énergie est absorbée et une quantité différente d'énergie est réfléchie vers le lecteur. Une fréquence sous-porteuse de rétromodulation peut aussi être appliquée. En modulant cette sous-porteuse par la position ouverte ou fermée du commutateur 22 définie par les données numériques d'identification à transmettre au lecteur.

Le dispositif RFID illustré sur la figure 1 présente un inconvénient majeur. En effet, Lorsque le commutateur 22 est ouvert, une tension est fournie à la capacité réservoir 18 qui se charge. Mais quand le commutateur 22 est fermé, même s'il existe une impédance du commutateur non nulle dans un cas réel, celle-ci est négligeable et la puissance reçue par l'antenne 10 est réfléchie en quasi-totalité. Seulement une quantité infime de cette énergie est fournie à la capacité 18. Cette dernière fournissant la tension d'alimentation pour la transmission des données se décharge donc. On peut ainsi considérer que le diagramme de la tension en fonction du temps aux bornes de la capacité 18 est celui représenté sur la figure 2. Pendant l'ouverture du commutateur 22, la capacité se charge et passe d'un niveau minimum Vmin au temps T1 à un niveau maximum Vmax au temps T2. Puis, à la fermeture du commutateur, la capacité se décharge à nouveau de Vmax au temps T2 à Vmin au temps T3, et ainsi de suite.

Si le dispositif RFID est assez éloigné du lecteur, la puissance reçue est faible. A capacité égale, la tension aux bornes du condensateur 18 descend alors au dessous d'une tension de seuil Vseuil nécessaire pour que les circuits de la puce puissent fonctionner et que les données d'identification puissent être transmises.

Pour pallier cet inconvénient, la solution utilisée aujourd'hui est d'augmenter la capacité si l'on désire identifier des objets éloignés. Mais on se heurte alors à la surface utile de la puce. En effet, en supposant que la capacité est de l'ordre de 200pF et en admettant une capacité par unité de surface importante de l'ordre de $6fF/\mu m^2$, il faut déjà une surface de capacité de $33330\mu m^2$, soit déjà plus de 3% de la surface d'une puce qui occuperait environ $1mm^2$ ! Augmenter la capacité revient donc à agir au détriment de la miniaturisation qui est un facteur essentiel dans ce domaine. Cet inconvénient devient un handicap encore plus fort quand la taille de la puce diminue.

Exposé de l'invention

Le but de l'invention est donc de fournir un dispositif d'identification par radiofréquence apposé sur un objet à identifier qui continue à fonctionner correctement même lorsque l'objet est éloigné du lecteur

L'objet de la présente invention concerne donc un dispositif d'identification par radiofréquence (RFID) comprenant une antenne connectée à une puce et destiné à être apposé sur un objet à être identifié par un lecteur distant transmettant au dispositif d'identification des signaux électromagnétiques reçus par l'antenne l'antenne transmettant en retour vers le lecteur des signaux fournis par la puce par rétromodulation au moyen d'un commutateur dont la position ouverte ou fermée définit les données numériques d'identification transmises par le dispositif, et le dispositif d'identification contenant les données permettant l'identification ainsi que la tension d'alimentation du dispositif. La puce comprend une impédance variable connectée en série avec le commutateur aux bornes de l'antenne et un moyen de détection de la tension d'alimentation pour ajuster la valeur de l'impédance de manière à ce que cette tension d'alimentation soit supérieure à une valeur prédéterminée au dessous de laquelle le dispositif ne peut plus transmettre les données numériques d'identification.

Description brèves des figures

Les buts, objets et caractéristiques de l'invention ressortiront mieux à la lecture de la description qui suit faite en référence aux dessins joints dans lesquels :

la figure 1 représente le schéma électrique d'un dispositif RFID de l'état de la technique ;
la figure 2 est un diagramme en fonction du temps de la tension aux bornes de la capacité réservoir du dispositif RFID représenté sur la figure 1 ;
la figure 3 représente le schéma électrique d'un dispositif RFID selon l'invention ;
la figure 4 est un diagramme en fonction du temps de la tension aux bornes de la capacité réservoir du dispositif RFID représenté sur la figure 3 ;
la figure 5 représente un schéma électrique équivalent du dispositif RFID illustré sur la figure 3 ;
la figure 6 est un diagramme en fonction de la tension source de la tension aux bornes de la capacité réservoir du dispositif RFID représenté sur la figure 3 selon différentes valeurs de l'impédance variable utilisée dans le cadre de l'invention ;
la figure 7 est un bloc diagramme représentant l'impédance variable et sa commande par un comparateur analogique selon un premier mode de réalisation de l'invention ; et
la figure 8. est un bloc diagramme représentant l'impédance variable et sa commande par un comparateur numérique selon un second mode de réalisation de l'invention

L'idée mère de l'invention est simple. A partir du moment où le dispositif RFID est à grande distance du lecteur, et donc se trouve en limite de fonctionnement, il ne faut pas gâcher l'énergie. I1 faut donc éviter d'appliquer une rétromodulation franche exigeant une puissance élevée et obligeant le dispositif à épuiser sa capacité réservoir. L'invention consiste donc à appliquer une rétromodulation douce permettant de minimiser la capacité réservoir pour un fonctionnement à même distance et permettant donc au dispositif de fonctionner à plus faible niveau de puissance.

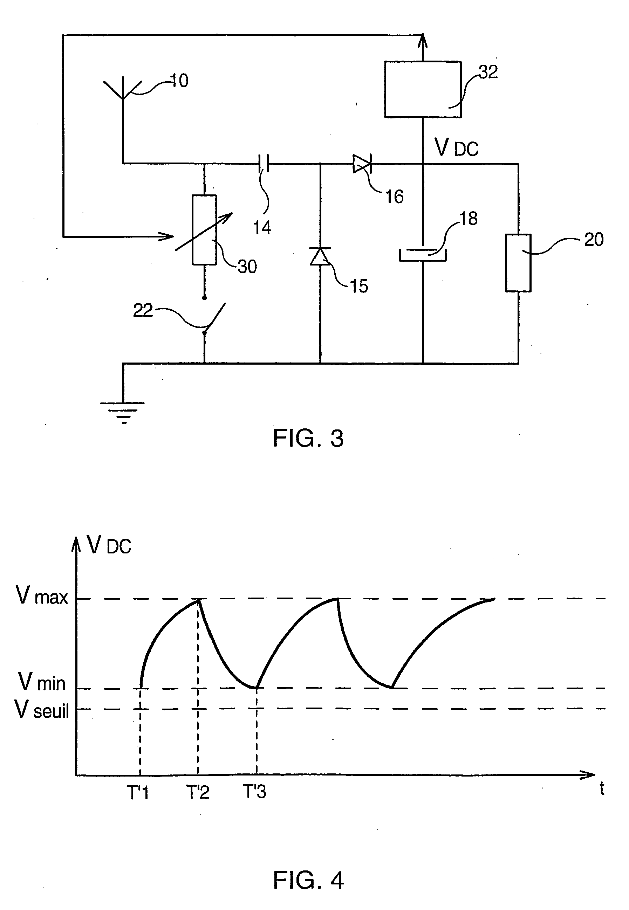

Pour appliquer une rétromodulation douce, l'invention consiste à installer une impédance 30 en série avec le commutateur de rétromodulation 22 comme illustré sur la figure 3. Cette impédance est variable et dépend du niveau de puissance absorbée par le dispositif RFID. Le niveau de puissance étant inversement proportionnel à l'impédance, plus cette impédance est faible, plus la puissance requise devient importante. De manière à conserver une puissance faible n'obligeant pas la capacité réservoir à se vider, l'idée est de mesurer la tension $V_{DC}$ aux bornes de la capacité réservoir 18 et d'ajuster la valeur de l'impédance 30 selon la valeur de cette tension.

Un moyen de détection 32 est donc connecté au point de tension $V_{DC}$ à la borne positive de la capacité réservoir. Lorsque le moyen de détection 32 détecte une baisse de la tension $V_{DC}$, il commande l'augmentation de la valeur de l'impédance 30 grâce à la sortie de commande 34 de façon à maintenir un niveau de puissance absorbée faible.

Le diagramme illustré sur la figure 4 montre la tension $V_{DC}$ en fonction du temps dans le cas d'un dispositif RFID rétromodulé faiblement. Durant cette rétromodulation, la puissance absorbée reste suffisamment importante pour que la tension $V_{DC}$ baisse tout en restant supérieure à la tension Vseuil au dessous de laquelle la rétromodulation ne peut plus se faire.

Ainsi entre les temps T'1 et T'2, la tension $V_{DC}$ passe de la tension Vmin supérieure à la tension Vseuil à la tension Vmax. Puis entre T'2 et T'3, la tension $V_{DC}$ redescend de Vmax à Vmin, et ainsi de suite. La tension $V_{DC}$ restant toujours supérieure à Vseuil, le dispositif RFID continue de fonctionner normalement.

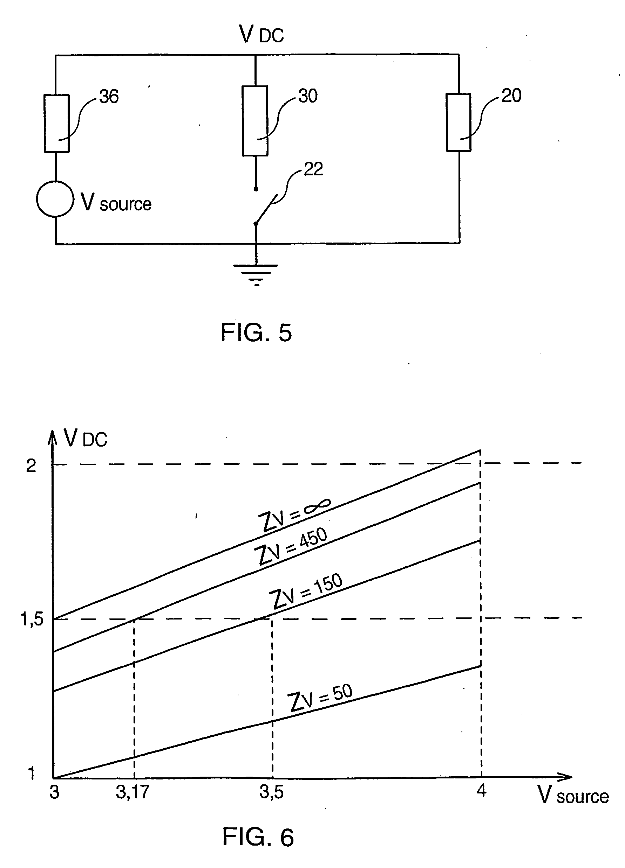

En référence à la figure 5 représentant le schéma équivalent du dispositif, l'antenne 10 se comporte comme une source de tension Vsource en série avec une impédance 36 de valeur Zs, en parallèle d'une part avec l'impédance variable 30 de valeur Zv en série avec le commutateur 22 et d'autre part avec l'impédance 20 des circuits de la puce de valeur Zt.

lorsqu'il y a rétromodulation, c'est-à-dire lorsque le commutateur 22 est fermé, la tension Vsource alimente l'impédance 36 de valeur Zs en série avec l'impédance Ze équivalente aux impédances Zv et Zt en parallèle.

Ze a pour valeur

$$Ze = Zv.Zt/(Zv+Zt)$$

La valeur de Ze est donc croissante en fonction de l'impédance variable Zv et tend vers la valeur de Zt lorsque la valeur de Zv tend vers l'infini.

La valeur de la tension résultante $V_{DC}$ est égale à

$$V_{DC} = V_S . Ze/(Ze+Zs)$$

Comme exemple, on peut prendre une valeur de 50Ω pour les deux impédances Zt et Zs. Dans ce cas, la valeur de Ze tend vers 50Ω lorsque Zv tend vers l'infini.

En référence à la figure 6 représentant la valeur de la tension $V_{DC}$ en fonction de la tension Vsource, on voit qu'une valeur de $V_{DC}$ adéquate est d'autant plus facile à obtenir que la valeur de Zv est élevée. En effet, avec une valeur Zv faible de 50Ω, Ze est égale à 25Ω et il faut donc une valeur de tension Vsource nettement au dessus de 4 volts pour que la tension $V_{DC}$ soit supérieure à la tension de seuil de 1,5 volt au dessous de laquelle le dispositif ne fonctionne plus. Or, cette tension source relativement importante est impossible à obtenir lorsque le dispositif RFID est éloigné du lecteur.

Avec une valeur de Zv égale à 150Ω, on voit que la valeur de $V_{DC}$ dépasse 1,5 volt lorsque la tension Vsource est égale à 3,5 volts, ce qui est plus facile à obtenir. Avec une valeur de Zv égale à 450Ω, on voit que la tension $V_{DC}$ est supérieure à 1,5 volt dès que la tension Vsource est supérieure à 3,17 volts. Enfin si la valeur Zv est de plus en plus grande et tend vers l'infini, la tension $V_{DC}$ est supérieure à 1,5 volt pour toute valeur Vsource supérieure à 3 volts. A noter que, en l'absence de l'invention et donc sans la présence d'une impédance Zv en série avec le commutateur 22, l'impédance du seul commutateur est très faible, de l'ordre de 4Ω, et la tension $V_{DC}$ prend une valeur est bien inférieure à la valeur de seuil d'environ 1,5 volt.

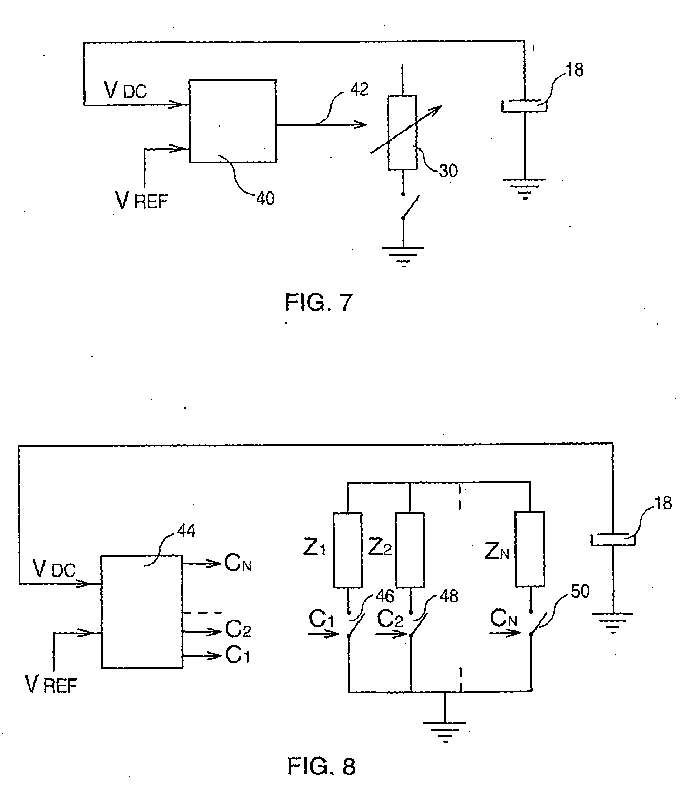

La réalisation du moyen de détection de la tension $_{VDC}$ peut se faire selon deux modes. Dans un premier mode de réalisation représenté sur la figure 7, un comparateur analogique 40 reçoit comme signaux d'entrée la tension $V_{DC}$ en provenance de la capacité réservoir 18. Le comparateur 40 effectue une comparaison entre cette valeur et une valeur $V_{REF}$ prédéterminée. En tenant compte de la différence entre $_{VDC}$ et $V_{REF}$, le comparateur 40 transmet un signal de commande sur sa sortie 42 pour ajuster la valeur de l'impédance variable 30 comme il a été expliqué précédemment. A noter que la valeur $V_{DC}$ utilisée en entrée du comparateur pourrait être tout autre valeur dépendant directement de la tension $_{VDC}$ prise en un autre point comme par exemple la connexion entre deux impédances en série alimentées par la tension $V_{DC}$.

Selon un second mode de réalisation illustré sur la figure 8, un comparateur numérique 44 est utilisé à la place du comparateur analogique 40 et l'impédance variable est remplacée par plusieurs impédances de valeur prédéterminée en parallèle. En tenant compte de la différence entre la valeur $V_{DC}$ (ou une autre valeur en relation directe avec $_{VDC}$ comme il a été mentionné ci-dessus) et la valeur $V_{REF}$ prédéterminée, le comparateur 42 transmet en sortie un signal de commande $C_1$, $C_2$, ...$C_N$. Chacune des lignes de sortie commande la fermeture d'un commutateur en série avec une des impédances. Ainsi, le commutateur 46 en série avec l'impédance $Z_1$ est commandé par la sortie de commande $C_1$, le commutateur 48 en série avec l'impédance $Z_2$ est commandé par, la sortie de commande $C_2$, et le commutateur 50 en série avec l'impédance $Z_N$ est commandé par la sortie de commande $C_N$. En supposant que ce soit la sortie $C_2$ qui est active, le commutateur 48 est fermé et l'impédance $Z_2$ sert d'impédance Zv comme on l'a vu précédemment. A noter que les valeurs des impédances $Z_1$, $Z_2$, ... $Z_N$ doivent toujours être choisies judicieusement de manière à obtenir une valeur de tension adéquate quelle que soit la distance entre le dispositif et le lecteur.

## Revendications

1. Dispositif d'identification par radiofréquence comprenant une antenne (10) connectée à une puce (12) et destiné

   à être apposé sur un objet;

   à être identifié par un lecteur distant transmettant au dispositif d'identification des signaux électromagnétiques reçus par ladite antenne, ladite antenne transmettant en retour vers ledit lecteur des signaux fournis par ladite puce par rétromodulation au moyen d'un commutateur (22) dans ladite puce dont la position ouverte ou fermée définit les données numériques d'identification transmises par ledit dispositif; et le dispositif d'identification contenant les données permettant l'identification ainsi que la tension d'alimentation ($V_{DC}$) dudit dispositif;

   ledit dispositif étant **caractérisé en ce que** ladite puce comprend une impédance variable (30) connectée en série avec ledit commutateur aux bornes de ladite antenne et un moyen de détection (32) de ladite tension d'alimentation pour ajuster la valeur de ladite impédance de manière à ce que cette tension d'alimentation soit supérieure à une valeur prédéterminée (Vseuil)au dessous de laquelle le dispositif ne peut plus transmettre lesdites données numériques d'identification.

2. Dispositif selon la revendication 1, dans lequel ladite puce (12) comprend une capacité réservoir (18) fournissant ladite tension d'alimentation ($V_{DC}$) à ses bornes.

3. Dispositif selon la revendication 2, dans lequel ledit moyen de détection de ladite tension d'alimentation ($V_{DC}$) est un comparateur analogique (40) dont la sortie (42) commande la valeur de ladite impédance variable (30) en réponse à la différence entre la valeur de ladite tension d'alimentation et d'une valeur de tension prédéterminée $V_{REF}$.

4. Dispositif selon la revendication 2, dans lequel ladite impédance variable est composée de plusieurs impédances en parallèle de valeur prédéterminée en série chacune avec un commutateur dont la position ouverte ou fermée définit les données numériques d'identification transmises par ledit dispositif et dans lequel ledit moyen de détection de ladite tension d'alimentation ($V_{DC}$) est un comparateur numérique (44) dont les sorties ($C_1, C_2, .. C_N$) commandent respectivement la fermeture d'un desdits commutateurs en série avec lesdites impédances de valeur prédéterminée.

## Claims

1. A radiofrequency identification device featuring an antenna (10) connected to a chip (12) and designed:

 - to be affixed to an object;
 - to be identified by a remote reader transmitting to the identification device electromagnetic signals received by said antenna, said antenna transmitting in return to said reader signals provided by said chip by retromodulation by means of a switch (22) in said chip whose open or closed position defines the digital identification data transmitted by said device; the radiofrequency identification device containing the data allowing the identification as well as the supply voltage ($V_{DC}$) of said device;

 said device being **characterized in that** said chip features a variable impedance (30) connected in series with said switch to the terminals of said antenna and a means for detection (32) of said supply voltage to adjust said impedance value so that this supply voltage is always greater than a predetermined value (Vthreshold) below which the device can no longer transmit said digital identification data.

2. The device according to claim 1, in which said chip (12) features a reservoir capacitance (18) supplying said supply voltage ($V_{DC}$) at its terminals.

3. The device according to claim 2, in which said means of detection of said supply voltage ($V_{DC}$) is an analog comparator (40) whose output (42) controls the value of said variable impedance (30) in response to the difference between the value of said supply voltage and a predetermined voltage value $V_{REF}$.

4. The device according to claim 2, in which said variable impedance consists of several impedances in parallel with a predetermined value each in series with a switch whose open or closed position defines the digital identification data transmitted by said device and in which said means of detection of said supply voltage ($V_{DC}$) is a digital comparator (44) whose outputs ($C_1, C_2, .. C_N$) respectively control the closing of one of said switches in series with said impedances of predetermined value.

## Patentansprüche

1. Funkfrequenzidentifizierungsvorrichtung, die eine mit einem Chip (12) verbundene Antenne (10) enthält und dazu bestimmt ist
 auf einem Gegenstand angebracht zu werden;
 von einem fernen Lesegerät identifiziert zu werden, das an die Identifizierungsvorrichtung elektromagnetische Signale überträgt, die von der Antenne empfangen werden, wobei die Antenne an das Lesegerät Signale zurück überträgt, die vom Chip durch Rückmodulation mittels eines Schalters (22) im Chip, dessen offene oder geschlossene Stellung die von der Vorrichtung übertragenen digitalen Identifizierungsdaten definiert, geliefert werden;
 und die Identifizierungsvorrichtung die die Identifizierung ermöglichenden Daten sowie die Speisespannung ($V_{DC}$) der Vorrichtung enthält,
 wobei die Vorrichtung **dadurch gekennzeichnet ist, dass** der Chip eine variable Impedanz (30), die in Reihe mit dem Schalter mit den Klemmen der Antenne verbunden ist, und eine Einrichtung (32) zur Erfassung der Speisespannung enthält, um den Wert der Impedanz so einzustellen, dass diese Speisespannung höher als ein vorbestimmter Wert (Vseuil) ist, unterhalb dessen die Vorrichtung die digitalen Identifizierungsdaten nicht mehr übertragen kann.

2. Vorrichtung nach Anspruch 1, bei der der Chip (12) einen Speicherkondensator (18) enthält, der an seinen Klemmen die Speisespannung ($V_{DC}$) liefert.

3. Vorrichtung nach Anspruch 2, bei der die Einrichtung zur Erfassung der Speisespannung ($V_{DC}$) ein analoger Komparator (40) ist, dessen Ausgangssignal (42) den Wert der variablen Impedanz (30) als Antwort auf die Differenz zwischen dem Wert der Speisespannung und einem vorbestimmten Spannungswert $V_{REF}$ steuert.

4. Vorrichtung nach Anspruch 2, bei der die variable Impedanz aus mehreren parallelen Impedanzen von vorbestimmtem Wert jeweils in Reihe mit einem Schalter zusammengesetzt ist, dessen offene oder geschlossene Stellung die von der Vorrichtung übertragenen digitalen Identifizierungsdaten definiert, und bei der die Einrichtung zur Erfassung der Speisespannung ($V_{DC}$) ein digitaler Komparator (44) ist, dessen Ausgangssignale ($C_1$, $C_2$, ..., $C_N$) je das Schließen eines der Schalter in Reihe mit den Impedanzen vorbestimmten Werts steuern.

FIG. 1

FIG. 2

FIG. 3

FIG. 4

V DC

FIG. 5

FIG. 6

FIG. 7

FIG. 8